# EUROPÄISCHE PATENTANMELDUNG

(11) **EP 0 705 799 A1**
(43) Veröffentlichungstag der Anmeldung: **10.04.1996**
(21) Anmeldenummer: 93909440.5
(22) Anmeldetag: 11.03.1993
(51) Int. Cl.: C03B 37/00, C03B 37/02

(54) **VERFAHREN ZUM HERSTELLEN VON BASALTWOLLE**

(30) Priorität: 12.03.1992 RU 5031919
(71) Anmelder: KIBOL, Viktor Fedorovich, Dzerzhinsk, 606034 (RU)
(72) Erfinder: KIBOL, Viktor Fedorovich, Dzerzhinsk, 606034 (RU)
(74) Vertreter: Zellentin, Rüdiger
(86) Internationale Anmeldenummer: RU9300063
(87) Internationale Veröffentlichungsnummer: WO9317975

(57) **Zusammenfassung**

Es ist ein Verfahren beansprucht, das eine Zuführung von Basaltgestein in eine Schmelzzone, dessen Erhitzung in dieser Zone bei einer Temperatur von 1500 bis 1600°C und Gewinnung einer Schmelze einschließt. Dann wird die Schmelze einer Homogenisierungszone zugeführt, wonach die eine Viskosität von über 100 Poise aufweisende homogenisierte Schmelze in eine Zone zum Formieren der Faser eintritt, wo ein Ausziehen der Faser mit einer Geschwindigkeit über 3500 m/min durchgeführt wird.

## Beschreibung

### Technisches Gebiet

Diese Erfindung bezieht sich auf die Technologie der Herstellung von Mineralfasern aus Gesteinsschmelzen - genauer gesagt - auf ein Verfahren zur Herstellung von Basaltfasern.

### Stand der Technik

Das Anwachsen des Produktionsvolumens bei Glasfasern wird in letzter Zeit durch das wachsende Rohstoffdefizit zurückgehalten, insbesondere das Defizit an Quarzsand, an Soda, an Borsulfat.

Zwecks Deckung des Rohstoffdefizits unter gleichzeitiger Zunahme der chemischen Beständigkeit, der Temperaturbeständigkeit und des Elastizitätsmoduls der Fasern wurde ein Verfahren zur Herstellung von Fasern aus Gesteinen eines Basalttypes entwickelt, die in der Natur weitverbreitet sind.

Die Basaltfasern übertreffen in einer Reihe der Haupteigenschaften - in der Alkali- und Säurebeständigkeit - die Glasfasern. So beträgt die Beständigkeit einer Basaltfaser nach dem Kochen in Salzsäure 82 %, einer Aluminiumborsilikatfaser nur 54 %. Das Elastizitätsmodul einer kontinuierlichen Basaltfaser ist auch 1,5 Mal höher als das einer Glasfaser. Die Temperaturbeständigkeit einer kontinuierlichen Basaltfaser ist auch um 250°C höher als die einer Aluminiumborsilikatfaser. Bei Aufenthalt unter 100%-iger Feuchtigkeit im Laufe von 64 Tagen wird die Festigkeit einer kontinuierlichen Basaltfaser praktisch nicht verändert, während die Aluminiumborsilikat enthaltenden Fasern 30% der Festigkeit verlieren.

Es ist ein Verfahren zur Herstellung einer Glasfaser bekannt (s. Urheberschein d. UdSSR Nr. 500192). Das bekannte Verfahren schließt das Einschmelzen von Quarzsand, Soda, Borsulfat in einer Schmelzzone, die Homogenisierung der Schmelze, das Ziehen von kontinuierlichen Glasfasern aus der gewonnenen Schmelze durch deren Aufwickeln auf eine Bobine, das Auftragen eines Schmelzmittels auf den auszuziehenden Faden mit nachfolgendem Trocknen des Fadens ein. Im Ergebnis beträgt der Durchmesser der gewonnenen Glasfasern 3 bis 5 µm.

Eine Benutzung des bekannten Verfahrens zur Herstellung von Basaltfasern ist aber nicht möglich, da der Basalt und seine Schmelze durch Eisenoxyde dunkelfarbig sind, was zur Verminderung der Wärmedurchlässigkeit beiträgt und als Folge die Verminderung des Temperaturintervalls der Herstellung von Basaltfasern bewirkt. Außerdem reicht die Zeit des Aufenthalts in der Schmelzzone der Basaltschmelze nicht, sich thermisch zu homogenisieren. Der Vorgang des Ziehens der Fasern dauert Sekundenteile und die Zone der Gewinnung der Fasern wird von Millimetern bestimmt, deshalb bleibt die Qualität der aus diesen Fasern hergestellten Basaltfäden wegen deren niedriger Elastizität niedrig.

Es ist ein Verfahren zur Herstellung von Fasern aus einer Gesteinsschmelze bekannt (s. Urheberschein d. UdSSR Nr. 461909), nach dem die Fasern bei einer Temperatur der Schmelze von 1200 bis 1300°C und einer Viskosität von 100 Poise hergestellt werden. Die hergestellten Fasern weisen eine niedrige Temperaturbeständigkeit und einen grösseren mittleren Durchmesser des aus diesen Fasern hergestellten elementaren Fadens über 14 µm auf, was diesen zur Herstellung von Hochtemperaturfiltern, die zum Auffangen von Bunt- und anderen Metallen in Abgasen verwendet werden, nicht benutzen läßt.

Am nächsten kommt nach dem technischen Wesen und der erreichten Wirkung ein Verfahren zur Herstellung von Fasern aus einer Gesteinsschmelze eines Basalttypes (s. Zeitschrift d. UdSSR "Stroiteljnyje Materialy i Konstrukzii", 1986, Nr. 3, Kijev, D.D. Dshigiris, W. F. Kibol, I. G. Pervak, L. N. Bombyrj, Art. "Herstellung einer kontinuierlichen Basaltfaser", S. 11 - 12).

Das bekannte Verfahren besteht im Folgenden. Das Basaltgestein wird in die Schmelzzone eines Schmelzofens, wo die Temperatur bei 1450°C ± 10°C gehalten wird, eingeführt und es wird eine Schmelze gewonnen, welche in eine Homogenisierungszone des Ofens geleitet wird. In der genannten Zone wird die Temperatur bei 1200°C gehalten, die die Kristallisationstemperatur der gewonnenen Schmelze übersteigt. Dann wird die Schmelze aus der Homogenisierungszone der Zone zur Formierung der Faser zugeführt und das Ziehen der Fasern wird mit einer Geschwindigkeit von 2135 bis 3200 m/min bei einer Viskosität der Schmelze in der Zone des Formierens der Faser unter 100 Poise durchgeführt.

Als Nachteil dieses Verfahrens ist ein großer, 11 µm übersteigender Durchmesser des komplexen Fadens wegen der relativ niedrigen Geschwindigkeit dessen Ausziehens bei 3200 m/min zu nennen. Eine Erhöhung der Geschwindigkeit führt zu seinem Abreißen.

### Offenbarung der Erfindung

Der Erfindung wurde die Aufgabe zugrunde gelegt, ein Verfahren zur Herstellung von Basaltfasern zu schaffen, bei dem durch Veränderung von Vorgangsparametern die Herstellung einer Faser mit verbesserten physischmechanischen Eigenschaften gewährleistet wird.

Die gestellte Aufgabe wird dadurch gelöst, daß bei einem Verfahren zur Herstellung von Fasern einschließend die Zuführung eines Basaltgesteines in eine Schmelzzone, Erhitzen bis auf die Einschmelztemperatur und Gewinnung einer Schmelze, Zuführung der gewonnenen Schmelze einer Homogenisierungszone, wo eine die Kristallisationstemperatur übersteigende Temperatur gehalten wird, Zuführung der homogenisierten Schmelze einer Zone des Faserformierens, Ausziehen von kontinuierlichen Fasern aus der Schmelze, gemäß der Erfindung die Erhitzung des Basaltgesteines bei einer Temperatur von 1500 bis 1600°C, das Ausziehen der kontinuierlichen Fasern mit einer den Wert von 3500 m/min übersteigenden Geschwindigkeit, bei einer den Wert von 100 Poise übersteigenden Viskosität in der Zone des Faserformierens durchgeführt werden.

Diese Durchführung des vorgeschlagenen Verfahrens zur Herstellung von Fasern gewährleistet die Gewinnung von kontinuierlichen Basaltfasern mit einem kleineren als 7 µm Durchmesser, wobei eine Erhöhung der Temperaturbeständigkeit der kontinuierlichen Basaltfasern erreicht wird, aus denen Erzeugnisse herstellbar sind, die bei einer den Wert von 700°C übersteigenden Temperatur verwendet werden können.

### Ausführung der Erfindung

Das Wesen der Erfindung wird aus einem konkreten Beispiel der Ausführung der Erfindung verständlich.

Das Verfahren gemäß der Erfindung wird folgenderweise durchgeführt. Ein Basaltgestein wird einer Schmelzzone eines Schmelzofens zugeführt, wo das Gestein bis auf die Temperatur von 1500 bis 1600°C erhitzt wird und eine Schmelze gewonnen wird. Die gewonnene Schmelze wird eine Zeit zum Homogenisieren gehalten. Dann wird die homogenisierte Schmelze einer Faserbildungszone zur Formierung von Fasern zugeführt, welche durch einen Speiser mit Ziehdüsen, in denen eine die Kristallisationstemperatur der gewonnenen Schmelze übersteigende Temperatur gehalten wird, gebildet ist. Die Schmelze tritt aus den Ziehdüsen in Form von zwiebelartigen Tropfen aus, die mit zunehmender Masse an den Ziehdüsen unter Bildung eines Faserbündels abreißen. Zunächst werden diese Fasern durch ein kontinuierliches manuelles Ausziehen gesammelt und das gewonnene Bündel wird durch schnelles Ziehen unter einem Winkel von 60 bis 80° in die Nut einer Rolle eines Fadensammlers eingeführt. Das Ausziehen wird mit einer den Wert von 3500 m/min übersteigenden Geschwindigkeit bei einer Viskosität über 100 Poise ohne Unterbrechungen und Verzögerungen durchgeführt, da somit an den Fasern langsam erstarrende Verdickungen entstehen, welche Überhitzungen hervorrufen und die Rolle des Fadensammlers beschädigen. Beim Erreichen einer erforderlichen Feinheit des Faserbündels wird sein Ende abgerissen, der Faden wird von Hand auf einer Bobinenstirnseite befestigt und unter Einschalten eines Mechanismus zum Aufwickeln aufgewickelt. Im Ergebnis werden die kontinuierlichen Basaltfasern durch Drehung der Bobine auf diese aufgewickelt. Zur Vermeidung einer gegenseitigen Reibung im Bündel der kontinuierlichen Fasern, deren gegenseitigen Verklebens und auch zum Schutz der Außenfläche der Fasern gegen die Wirkung der Umgebung und gegen deren Zerstörung werden sie bei der Bearbeitung der Faseroberfläche mit einem Schmälzmittel überzogen. Die Bobinen mit den aufgewickelten kontinuierlichen Fasern werden von dem Bobinenhalter abgenommen und zur Verarbeitung übergeben.

Die nach dem vorgeschlagenen Verfahren hergestellten kontinuierlichen Basaltfasern weisen einen mittleren Durchmesser einer Elementarfaser kleiner als 7 µm bei der Geschwindigkeit des Auszugs von 3500 m/min und der Ausziehtemperatur des Auszugs von 1500°C auf.

### Betriebsanwendbarkeit

Diese Erfindung kann am erfolgreichsten zur Herstellung von Hochtemperaturfiltern in der erdölverarbeitenden Industrie, in der Metallurgie, zur Herstellung von Platten in der Radio-Elektronen-Industrie, bei Kompositionswerkstoffen, die eine hohe Festigkeit im Ausgangszustand, Beständigkeit gegen aggressive Medien und eine hohe Lebensdauer aufweisen müßen, ausgenutzt werden.

## Patentansprüche

1. Verfahren zur Herstellung von Basaltfasern, einschließend die Zuführung eines Basaltgesteines einer Schmelzzone, dessen Erhitzung in dieser Zone bis auf die Schmelztemperatur und Gewinnung einer Schmelze, Zuführung der gewonnenen Schmelze einer Homogenisierungszone, bei der eine die Kristallisationstemperatur übersteigende Temperatur gehalten wird, Zuführung der homogenisierten Schmelze einer Zone zum Formieren der Faser und Ausziehen aus der Schmelze von kontinuierlichen Fasern, dadurch gekennzeichnet, daß die Erhitzung des Basaltgesteins bei einer Temperatur von 1500 bis 1600°C und das Ausziehen der Fasern mit einer Geschwindigkeit über 3500 m/min bei einer Viskosität der Schmelze in der Zone des Formierens der Faser über 100 Poise durchgeführt werden.
